# EUROPEAN PATENT SPECIFICATION

(11) **EP 0 255 116 B1**
(45) Date of publication and mention of the grant of the patent: **06.07.1994**
(21) Application number: 87110945.0
(22) Date of filing: 28.07.1987
(51) Int. Cl.: B41J 2/36

(54) **Thermal print head printing control apparatus**
Drucksteuerung für einen Wärmedruckkopf
Système de contrôle pour têtes d'impression thermiques

(30) Priority: 29.07.1986 JP 176770/86
(43) Date of publication of application: 03.02.1988
(73) Proprietor: Kabushiki Kaisha Sato, Shibuya-ku Tokyo (JP)
(72) Inventor: Murata, Shinsuke, Iwata-Ken (JP)
(74) Representative: Grünecker, Kinkeldey, Stockmair & Schwanhäusser Anwaltssozietät

(56) References cited:
- GB-A- 2 138 190
- US-A- 4 407 003
- US-A- 4 573 058
- PATENT ABSTRACTS OF JAPAN vol. 10, no. 153 (M-484)(2209), 3 June 1986, JP-A-61 008364 (TOSHIBA K.K.) 16.01.1986

## Description

This invention relates to an apparatus which controls the printing of a thermal print head which performs printing on print media thermally, and more particularly to a printing control apparatus whereby the print density can be maintained constantly at the optimum level even when there is fluctuation of the thermal print head temperature or power supply voltage, or both.

Figure 5 shows an example of a prior art portable thermal label printer (GB-A-2 138 190) which uses a thermal print head for printing, for example, bar codes and the like on a print medium. In such a printer, a voltage is supplied to the heating elements of the thermal print head so as to print a bar code on a label, for example, and after the label has been printed and separated from a backing sheet, it is affixed to an item of merchandise.

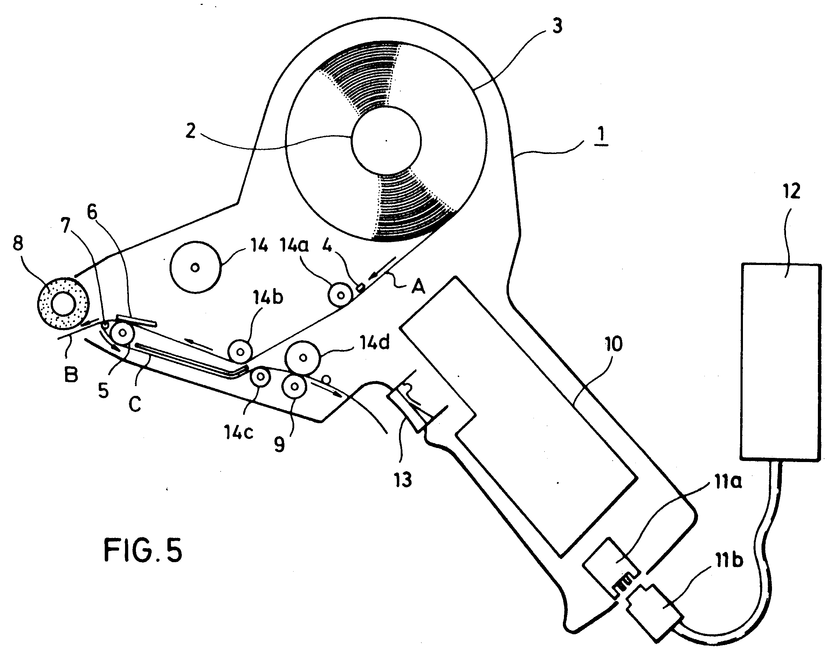

The construction of the portable thermal label printer shown in Figure 5 will now be described hereinbelow in outline. The printer is provided with a label roll 3 on a label holder 2 in a main unit 1. The label roll 3 has a label separating strip A wound thereon; after positioning the label separating strip A is guided from the label roll 3 by rollers 14a and 14b and the required printing is performed by the thermal print head 6 which is positioned over a platen 5. After printing, a backing sheet C is redirected at a bending pin 7 so that the labels B are fed out of the main unit 1 while the backing sheet C is guided by roller 14c and is then gripped between backing sheet feed roller 9 and roller 14d so that it feeds out from the lower part of the main unit 1.

The above sequence of operations is effected by a motor 14 which is controlled by, for example, pulse width modulation (PWM) to drive the platen 5 and backing sheet feed roller 9 linked by a timing belt or the like (not illustrated). The information to be printed is input from an external input device 12 via connectors 11a and 11b to a printer control section 10 and the printing information is converted to print dot patterns. When a switch 13 is operated one dot line of the above printing dot pattern information is output from the printer control section 10 to the thermal print head 6. Labels B are subjected to heat from heating elements (not shown) contained within the thermal print head 6 to perform the printing. That is, a specific voltage is applied for a set time from the printer control section 10 to the thermal print head 6 heating elements, whereby heat is applied to the label B from the heating elements to perform the said printing.

After the printing, in order to print the next dot line of information a pulse of current is output from the printer control section 10 to the motor 14 and the label separating sheet A is transported by a minute amount. Then the next printing dot line is performed by the thermal print head 6 similarly to the above printing operation. This operation is repeated a requisite number of times until an optoelectronic sensor 4 detects a mark (not shown) that has been provided on the label separating sheet A for each label B, at which point the above printing operation stops. During this printing operation, with respect to the label separating sheet A, the backing sheet C is redirected at the bending pin 7 so that the label B is ejected from the main unit 1 and the backing sheet C is discharged from the lower portion of the main unit 1 after being gripped by backing sheet feed roller 9 and roller 14d.

In the printing operation using a conventional printer of the above configuration, for each print operation, a specific voltage is supplied to the thermal print head heating elements for a set time. However, when this type of printing to a print medium is performed continuously, the temperature of the heating elements of the thermal print head at the start of printing differs from that during the course of the printing. The temperature of the heating elements is low at the start of the printing, and in the course of the printing the temperature becomes very high. The effect of the temperature change is that even if for each printing operation the voltage is applied for a set time to the heating elements, the density of the print at the start of the printing operation and the print density midway through the printing will be different.

In addition to this, when a battery, for example, is used as the power source for the voltage applied to heating elements, and in the case where the power supply voltage is applied to the heating elements, print density will differ according to the value of the voltage being supplied from the battery.

Accordingly, in the case of continuous printing with a prior art printer, there is a difference between what the internal temperature of the thermal print head and the applied voltage are at the start of the printing operation and what they become in the course of the printing operation. Therefore, the prior art control apparatus adjusts the length of time that the print head is energized as a function of battery voltage, ambient temperature and elapsed time since the print head was previously energized. Then by means of a look-up table pulse width control of the motor is performed.

It is the object of the invention to perform printing in accordance with the current temperature of the thermal print head and the current power supply voltage value.

This object of the present invention is solved by the features as claimed in the characterizing part of claim 1. In accordance with the invention this is attained by storing in the printer control section which controls the thermal print head and the like, a time constants table which shows the optimum printing time corresponding to the supply voltage, i.e. the voltage application time for the heat the print medium is to be subjected to at the thermal print head, configured so that the said printer control section looks up the application time in the time constants table corresponding to the temperature as obtained from a thermal print head temperature detecting means and the voltage as obtained from a power supply voltage detecting means, arranged so that the thermal print head performs the printing in accordance with the said time.

The embodiments of the present invention will now be described in detail with reference to the accompanying drawings.

### BRIEF DESCRIPTION OF THE DRAWINGS

Figure 1 is a block diagram of a printer control circuit which includes a thermal print head printing control apparatus according to one embodiment of the present invention;
Figure 2 is a drawing illustrating a table of time constants for thermal print head voltage application showing the printing times corresponding to the thermal print head temperature and power supply voltage, the table being stored in the ROM shown in Figure 1;
Figure 3 is a circuit diagram illustrating one specific circuit of the thermal print head of Figure 1;
Figure 4 is a flow chart showing the control process of the microcomputer shown in Figure 1;
Figure 5 is a sectional view illustrating the construction of an ordinary portable thermal label printer.

### DESCRIPTION OF THE PREFERRED EMBODIMENTS

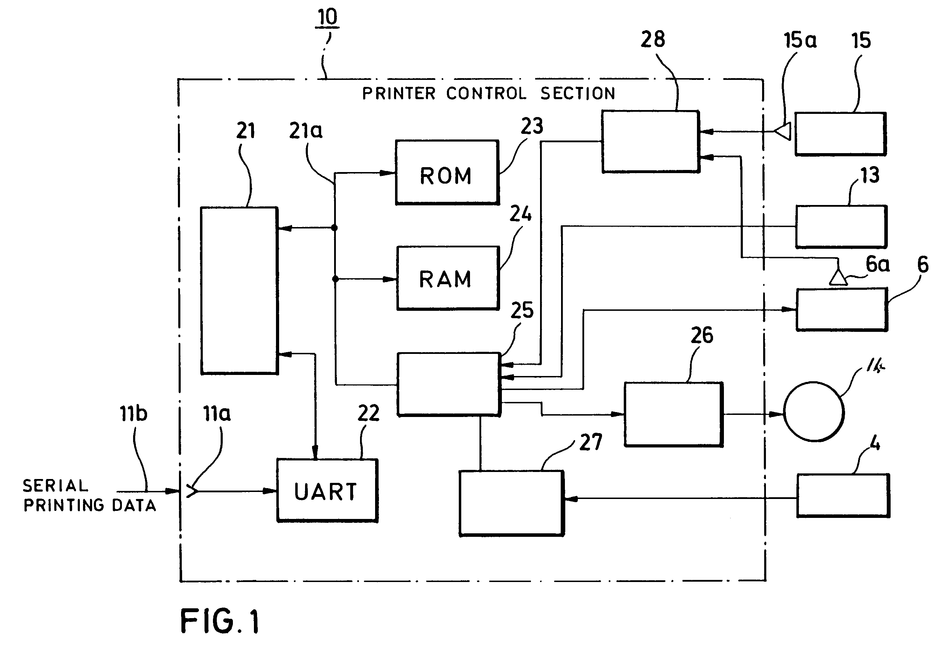

The block diagram of Figure 1 illustrates the electrical configuration of the portable thermal label printer shown in Figure 5. In Figure 1, the optoelectronic sensor 4, the motor 14, the thermal print head 6, the printer control section 10, the connectors 11a and 11b and the switch 13 correspond to the parts in Figure 5 denoted by the same numbers. The construction will now be explained in detail with reference to Figure 1.

The printer control section 10 comprises a CPU in the form of a microcomputer 21, to which is connected, a programmable serial interface such as a UART 22, for example, and a bus 21a for transferring data between a ROM memory 23, a RAM memory 25 and an I/O port 25.

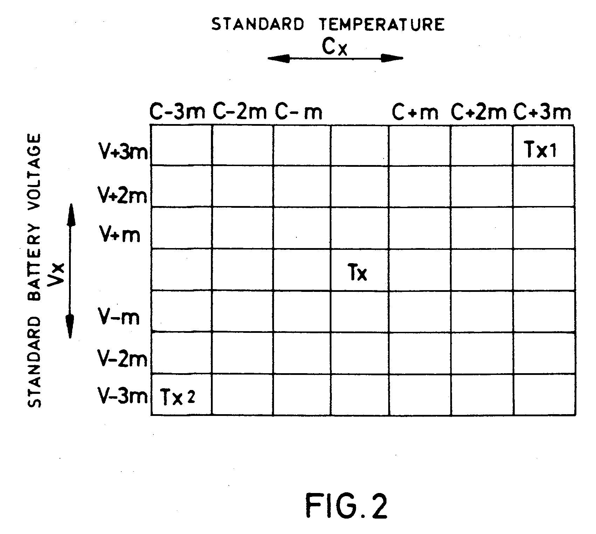

The UART 22 is connected to the external input device 12 shown in Figure 5 by means of the connectors 11a and 11b. Printing data stored in the external input device 12, that is, the data to be printed on the label B on the label separating sheet A by the thermal print head 6, is input and sent to the microcomputer 21 in serial form. In the ROM 23, which is connected via the bus 21a to the microcomputer 21, is permanently stored the microcomputer 21 control program and a character generator for generating dot pattern data in accordance with what is to be printed, and the thermal print head application time constants table (hereinafter referred to simply as "table") shown in Figure 2 and which is a characterizing feature of the present invention.

The RAM 24, connected like the ROM 23 to the bus 21a, is for temporary storage of the above printing dot pattern data. The I/O port 25, also connected to the bus 21a, is for interfacing with the various mechanisms shown in Figure 5 (for example, the motor 14).

When the switch 13 shown in Figure 1 is operated, a print start signal is input to the I/O port 25, and in accordance with this start signal, print operation start information is sent to the microcomputer 21. In order to start the motor 14 when the printing operation is to be commenced in accordance with the signal from the microcomputer 21, a drive signal is applied to a DC motor control circuit 26 and print dot pattern data and a strobe signal and the like are output to the thermal print head 6.

When the optoelectronic sensor 4 detects the mark on the label separating strip A, a mark detection signal is output from the mark detection circuit 27 to the I/O port 25, and when the I/O port 25 outputs that information to the microcomputer 21 the microcomputer 21 stops the operation of the thermal print head 6 and the motor 14.

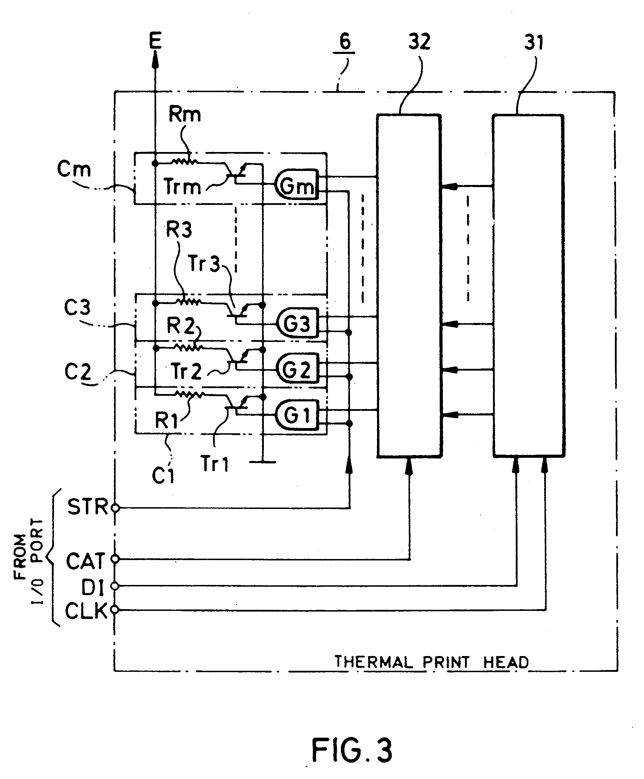

Figure 3 shows details of the thermal print head 6. The thermal print head 6 is provided with heating element resistors R₁ - Rₘ which heat up in dot units corresponding to the print dot pattern data that is input for carrying out the printing. In the drawing, 31 denotes a shift register comprised of flip-flop circuits provided corresponding to the number of dots, for example. In accordance with a clock signal CLK input from the I/O port 25 shown in Figure 1, printing pattern data signals DI are input serially to the shift register 31 to accumulate one line of print pattern data. The numeral 32 denotes a latch circuit for latching the one line of print pattern data in the shift register 31 when a latch signal LAT is input from the I/O port 25.

C₁ - Cₘ are heating element drive segments provided to correspond with the number of dots in one line. The heating element drive segments C₁ - Cₘ have corresponding gate elements G₁ - Gₘ, and for the driving by these elements, transistors Tᵣ₁ - Tᵣₘ are provided connected in series with the heating element resistors R₁ - Rₘ between a power supply source E and ground. As a result, with respect to the heating element drive segments C₁ - Cₘ, when the strobe signal STR is input, gate elements G₁ - Gₘ open, and with respect to dot data input from the latch circuit 32 that is High (i.e., at the printing level) at this time, the output side of the gate elements G₁ - Gₘ goes High and this High signal is applied to the base of the corresponding transistor Tᵣ₁ - Tᵣₘ, as a result of which current flows in the heating element resistors R₁ - Rₘ. The heat produced by this current flow results in one line of dots being printed on the label B at the thermal print head 6 shown in Figure 5.

When the thermal print head 6 is thus operated to print continuously, heat builds up in the print head so that in the latter part of the printing the temperature becomes high. With this embodiment of the present invention, as shown in Figure 1, a temperature detector 6a (temperature detection means) such as a thermistor or the like is provided in the vicinity of the thermal print head 6. When the temperature in the label printing state becomes low, regarded on a single dot basis, the print becomes lighter than expected, while when the temperature is high, the print becomes darker. Therefore, when printing a bar code, for example, when the temperature is low the bars become finer while at high temperatures the bars become thicker and blurry. In order to improve this, the amount of time the print head uses to produce the print on the label is made variable in accordance with the temperature. That is, when the temperature of the print head is low the printing time is made longer than usual, and it is made shorter when the temperature is high.

Change in the power supply voltage is another possible factor which may cause a change in the printing state. In addition to the above control of printing time according to temperature, higher quality print can be obtained by means of a configuration whereby the printing time is also controlled in accordance with the power supply voltage value.

To realize this, in this embodiment, as shown in Figure 1, a voltage detector 15a (voltage detection means) is provided to detect the output voltage of the printer battery 15. The analog outputs of the temperature sensor 6a and the voltage detector 15a are input to the A/D converter 28 shown in Figure 1 where the analog temperature and voltage values are converted to digital form and output to the I/O port 25.

As explained in the foregoing, a table of printing times corresponding to the temperature of the thermal print head 6 and the output voltage of the battery 15 is stored in the ROM 23 of the printer control section 10 shown in Figure 1. Each square of the table displays in a specific unit the optimum printing time for each of the above current temperatures and current power supply voltages. For example, TX indicates the printing time when temperature and supply voltage are at standard levels. Thus, when the temperature is a very high C + 3ₘ and the supply voltage a very high V + 3ₘ, the corresponding time TX₁ is the shortest printing time in the table. On the other hand, when the temperature is a very low C - 3ₘ and the supply voltage a very low V - 3ₘ, the corresponding time TX₂ is the longest printing time in the table. Therefore, if for each printing by the thermal print head 6 reference is made to the table of Figure 2 that indicates the print head voltage application time constants stored in the ROM 23 and the printing is performed in accordance with the indicated printing time, it is possible to constantly obtain optimum printing.

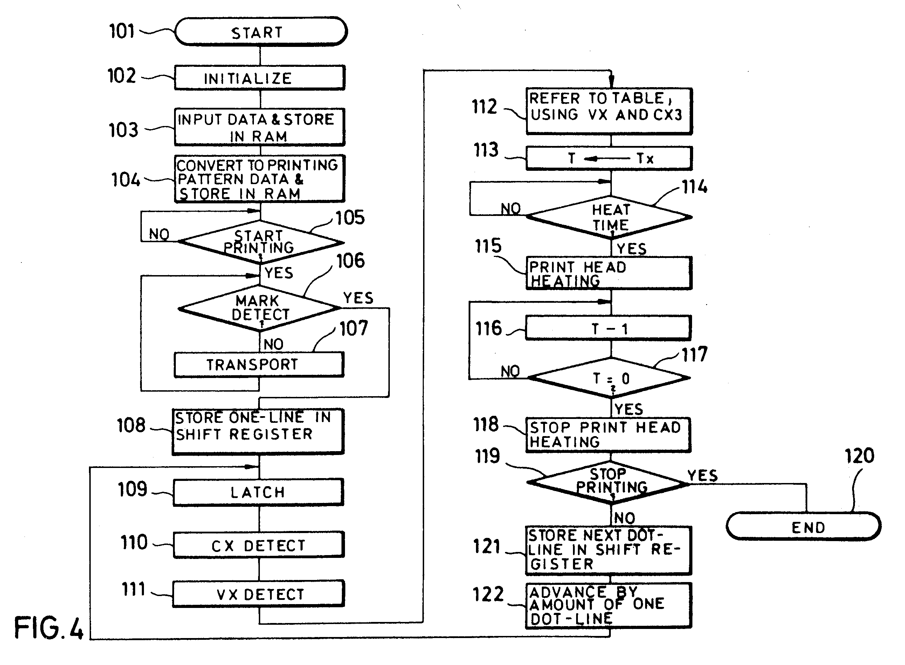

The operation of the printer control section of Figure 1 with the thermal print head which prints thus will now be explained with reference to the flow chart of Figure 4.

At the start of the operation (step 101), the microcomputer 21 initializes the RAM 24, I/O port 25 and the registers in the microcomputer 21 (step 102). In the initialization, the printer control section 10 inputs the data to be printed from the external input device 12 shown in Figure 5. This print data is input to the microcomputer 21 via the UART 22 and is temporarily stored in the RAM 24 as parallel data (step 103). As the print data is in code form, it has to be converted to print dot image pattern data. For this, the microcomputer 21 refers to the character generator provided in the ROM 23 to convert the print data stored in the RAM 24 to print pattern data, which is then stored back in the RAM 24 (step 104). When the print data input from the external input device 12 has been converted to print pattern data, the printer control section 10 is readied for producing labels B.

The production of the labels B is started by operating switch 13. When switch 13 is pressed a start signal from the switch 13 is input to the I/O port 25 and then output to the microcomputer 21 via the bus 21a. At this point the microcomputer 21 is waiting for the switch-on state of the switch (step 105), and when it is detected that the start signal has been input the procedure moves on to step 106 at which it is checked whether a label B has been transported to the specified position, i.e. the printing start position. When the label B comes to the printing start position the optoelectronic sensor 4 detects the mark on the label separating sheet A and a mark detection signal is output to the I/O port 25 by the mark detection circuit 27. Until the mark is detected the microcomputer 21 continues to output to the I/O port 25 a motor drive signal to drive the motor 5 for transporting the label separating sheet A. When this motor drive signal from the I/O port 25 is applied to the motor drive control circuit 26, the motor 5 is energized for one step. This energization is repeated a number of times (step 107) until the said mark is detected, whereupon the procedure advances along the Yes line in step 106.

In the next step, step 108, the microcomputer 21 reads out the printing pattern data stored in the RAM 24 in order to send one line of printing pattern data to the thermal print head 6, and outputs the data to the thermal print head 6. The clock signal CLK and the printing pattern data signals DI are input to the thermal print head 6 via the I/O port 25, and the printing pattern data are read into the shift register 31 a dot at a time in accordance with the clock signals CLK (step 108). Following this, the latch signal LAT is input to the thermal print head 6 from the I/O port 25. By means of the latch signal LAT, the printing dot pattern data entered in the shift register 31 is fetched, and latched in the latch circuit 32 (step 109). Next, the temperature CX of the thermal print head 6 as detected by the temperature detector 6a (step 110) is read by the microcomputer 21 via the I/O port 25 and the A/D converter 28, and the output voltage VX of the battery 15 is detected by the voltage detector 15a (step 111). The detected temperature CX and voltage VX are input to the A/D converter 28 where they undergo conversion from analog to digital values. The converted temperature CX and voltage VX are output to the microcomputer 21 via the I/O port 25. The microcomputer 21 searches the constants table (Figure 2) stored in the ROM 23 for the temperature CX and the voltage VX (step 112). The value of the intersection of the retrieved values, i.e., the appropriate printing time TX value, is set as the application time T in the microcomputer 21 (step 113).

At this point it is determined (in step 114) by the microcomputer 21 whether the conditions are right for the thermal print head 6 to print to the label separating sheet A, that is, whether it is the right time for the heating. If it is, the procedure moves to step 115. The print head heating is performed in step 115 by a strobe signal STR the microcomputer 21 outputs to the thermal print head 6 via the I/O port 25.

The strobe signal STR is applied uniformly to one of the input terminals of each of the gate elements G₁-Gₘ of the heating element drive segments C₁ - Cₘ, as shown in Figure 3. When the strobe signal STR thus applied is High, as the print dot pattern data is being input in dot units from the latch circuit 32 to the other input terminal of the gate elements G₁ - Gₘ, a High signal appears on the output side only of those of the gate elements G₁ - Gₘ which have a High signal applied to both input terminals, and the said High signal output signal is applied to the base of the corresponding transistors Tᵣ₁ - Tᵣₘ. Therefore, the transistors Tᵣ₁ - Tᵣₘ to the base of which a High signal is applied are turned on, and the corresponding element resistors R₁ -Rₘ heat up. This heat results in one dot line being printed on a label B which has been transported to the thermal print head 6 position (Figure 5). This printing is carried out in the interval in which the strobe signal STR is being sent from the I/O port 25 to the thermal print head 6. After a set time has elapsed from the output to the I/O port 25 of the strobe signal STR by the microcomputer 21, the application time T value set as described in the above is decremented by one (step 116). Following this, it is determined whether T has become zero (step 117). If T does not equal zero, the strobe signal STR continues to be output. After a further fixed time has elapsed, the value of T is decremented by one.

Thus, if T = 32, after T has been decremented 32 times so that T = 0, in step 117 the procedure will advance along the Yes line to step 118 where the application of heat from the thermal print head 6 to the label separating sheet A is stopped. This is done by stopping the strobe signal STR which is being output from the microcomputer 21 to the thermal print head 6 via the I/O port 25. That is, the signal at the STR terminal (Figure 3) goes Low, which turns of the operation of the transistors Tᵣ₁ - Tᵣₘ, which shuts off the current that has been flowing up to that point in the heating element resistors R₁ - Rₘ to produce heat. Shutting off the current ends one dot-line of printing by the thermal print head 6. At this point, it is determined whether the mark on the label separating sheet A has been detected by the optoelectronic sensor 4 (Figure 1). If the mark has been detected, the printing is ended (step 119) and the procedure ends (step 120). If the mark is not detected in step 119, the process branches off to the next step along the No line. In step 121, the second dot-line of the print dot-pattern data is stored in the shift register 31 in accordance with the clock signal CLK. In order to print the next line of dots, the microcomputer 21 outputs a motor drive signal to the motor drive control circuit 26 to advance the motor 14 by one step so as to transport the label separating sheet A by the amount of one dot-line (step 122). Following this, the procedure goes back to step 109 and the above sequence of operations is repeated.

Through the repetition of steps 109 to 122, a printing time corresponding to the temperature of the thermal print head 6 and the output voltage of the battery 15 is obtained by reference to the constants table (Figure 2) stored in the ROM 23, and by printing in accordance with this printing time, the print can be maintained at a constant density.

In the above embodiment the temperature of the thermal print head and the output voltage of the battery are detected for each line of dots printed. However, it may also be carried out at the end of each of a series of printing operation cycles; or, a length of time may be set in which the print density may be affected and the detection carried out after that time has elapsed and printing time altered in accordance with the printing time indicated in the constants table.

## Claims

1. A thermal print head printing control apparatus which has a temperature detecting means (6a) for detecting the temperature of a thermal print head (6) which employs heat to print on a print medium (B) advanced by a motor (14) controlled by a drive control circuit (26); power supply voltage detecting means (15a) for detecting at least the output voltage of a power supply (15) that applies a voltage to the thermal print head (6) for the said heating; and a look-up table storing control data;
said table being provided in a memory storage means (23) of a printer control portion (10) which controls the thermal print head (6) and the transport of the said print medium (B);
whereby in the printing of the said print medium (B), the said printer control portion (10) controls the printing so that printing is performed in accordance with a printing time based on the said thermal print head temperature and power supply voltage;
**characterized in that**
said motor drive control circuit (26) advances said print medium (B) step by step and one dot-line is printed by the print head (6) while the motor (14) is at rest, and said look-up table is a time constants table which indicates a printing time corresponding to said thermal print head temperature and power supply output voltage;
wherein the print head is energized in a predetermined period corresponding to said printing time for each dot-line.

## Patentansprüche

1. Drucksteuergerät für einen Wärmedruckkopf mit einer Temperaturerfassungseinrichtung (6a) zum Erfassen der Temperatur eines Wärmedruckkopfes (6), der Wärme zum Drucken auf einem Druckmedium (B) benutzt, das von einem Motor (14) vorgeschoben wird, der von einer Antriebssteuerschaltung (26) gesteuert wird;
einer Speisespannungs-Erfassungseinrichtung (15a) zum Erfassen mindestens der Ausgangsspannung einer Speisequelle (15), die eine Spannung an den Wärmedruckkopf (6) zu seiner Erwärmung gibt, und einer Aufsuch-Tabelle, die Steuerdaten speichert;
die Tabelle ist in einer Speichereinrichtung (23) eines Druckersteuerteils (10) vorgesehen, die den Wärmedruckkopf (6) und den Transport des Druckmediums (B) steuert;
wodurch beim Drucken des Druckmediums (B) der Druckersteuerteil (10) das Drucken so steuert, daß Drucken nach Maßgabe einer Druckzeit aufgrund der Temperatur des Wärmedruckkopfes und der Speisespannung durchgeführt wird;
**dadurch gekennzeichnet**, daß
die Motorantriebssteuerschaltung (26) das Druckmedium (B) Schritt für Schritt vorschiebt und eine Punktlinie vom Druckkopf (6) gedruckt wird, während der Motor stillsteht, und die Aufsuch-Tabelle eine Zeitkonstantentabelle ist, die eine Druckzeit entsprechend der Temperatur des Wärmedruckkopfes und der Ausgangsspannung der Speisequelle angibt,
wobei der Druckkopf in einer bestimmten Periode gespeist wird, die der Druckzeit für jede Punktlinie entspricht.

## Revendications

1. Dispositif de commande d'impression de tête d'impression thermique qui comporte un moyen de détection de température (6a) pour détecter la température d'une tête d'impression thermique (6) mettant en oeuvre de la chaleur pour effectuer une impression sur un support d'impression (B) que fait avancer un moteur (14) commandé par un circuit de commande d'entraînement (26) ; un moyen de détection de tension de source d'alimentation (15a) pour détecter au moins la tension de sortie d'une source d'alimentation (15) qui applique une tension à la tête d'impression thermique (6) pour ledit chauffage ; et une table de consultation contenant des données de commande ;
ladite table étant prévue dans un moyen de mémorisation de mémoire (23) d'une partie de commande d'imprimante (10) qui commande la tête d'impression thermique (6) et le transport dudit support d'impression (B) ;
ladite partie de commande d'imprimante (10) commandant de la sorte l'impression, pendant l'impression dudit support d'impression (B),
de sorte qu'une impression est exécutée conformément à un temps d'impression en fonction de ladite température de tête d'impression thermique et de la tension de source d'alimentation ;
caractérisé en ce que
ledit circuit de commande d'entraînement de moteur (26) fait avancer ledit support d'impression (B) pas-à-pas et une ligne de points est imprimée par la tête d'impression (6) tandis que le moteur (14) est au repos, et ladite table de consultation est une table de constantes de temps qui indique un temps d'impression correspondant à ladite température de tête d'impression thermique et à la tension de sortie de source d'alimentation ;
dans lequel la tête d'impression est excitée pendant une période prédéterminée correspondant audit temps d'impression pour chaque ligne de points.
